Europäisches Patentamt

**European Patent Office**

Office européen des brevets

(19)

(11) Publication number: **0 122 147**
A1

(12)

# EUROPEAN PATENT APPLICATION

(21) Application number: **84302430.8**

(22) Date of filing: **10.04.84**

(51) Int. Cl.³: **B 25 J 9/00**

(30) Priority: **14.04.83 US 484785**

(43) Date of publication of application: **17.10.84**
**Bulletin 84/42**

(84) Designated Contracting States: **DE FR GB IT SE**

(71) Applicant: **WESTINGHOUSE ELECTRIC CORPORATION, Westinghouse Building Gateway Center, Pittsburgh Pennsylvania 15235 (US)**

(72) Inventor: **Antoszewski, Richard Stanley, 212 Highlander Heights Dr., Glenshaw Pennsylvania (US)**
Inventor: **Garin, John, 131 Mt. Lebanon Blvd, Apt. 9, Pittsburgh Pennsylvania (US)**
Inventor: **Soroka, Daniel Patrick, 509 Walden Way, Imperial Pennsylvania (US)**
Inventor: **Hicken, Michael Graham, 632 Deer Watch Rd., Bridgeville Pennsylvania (US)**
Inventor: **Passarelli, David Lee, 619 Sarver Rd., Sarver Pennsylvania (US)**

(74) Representative: **van Berlyn, Ronald Gilbert, 23, Centre Heights, London, NW3 6JG (GB)**

(54) **An improved radial-theta manipulator apparatus.**

(57) A manipulator arm apparatus comprises a radial arm assembly (for linear movement) and a theta axis assembly (for angular movement about a theta axis); the radial arm assembly is secured to the theta axis assembly which provides 320° degree horizontal rotation of the manipulator arm assembly in response to position signals from a control console. A ball screw drive mechanism mechanically positions a carriage along a dual rail guide system in the radial manipulator arm assembly in response to position signals from the control console. A module consisting of a vertical stroke unit and an end effector is attached to the carriage to service a work-envelope defined essentially by the radial travel of the carriage, the degree of rotation of the theta axis assembly, and the vertical movement of the end effector.

1

# AN IMPROVED RADIAL-THETA MANIPULATOR APPARATUS

## BACKGROUND OF THE INVENTION

This invention generally relates to industrial robots and more particularly to an industrial manipulator having a simplified structure for radial and angular motion. The angular motion mechanism is hereinafter referred to as that axis assembly, with the angular movement being referred to herein as "theta" movement.

The general acceptance of industry automation as an essential requirement for improving productivity has increased the acceptance of the robot, or manipulator apparatus, as a mechanism for achieving automated industrial applications. Numerous robot configurations have been designed to meet specific industrial needs, i.e., cutting, welding, assembly, material handling, etc. The designs of many commercially available robots are unique to a particular application and employ complex mechanical design features and sophisticated control functions dedicated to the specific industrial application.

The acceptance of robots as a useful industrial "tool" has resulted in a market demand for a manipulator apparatus exhibiting rather simplified design features of a machine tool suitable for control by conventional machine tool and numerical control techniques.

## SUMMARY OF THE INVENTION

The present invention in its broad form resides in a manipulator apparatus, of the type capable of radial movement and angular movement about an axis, comprising: an angular movement assembly hereinafter referred to as theta axis assembly; a radial movement assembly hereinafter referred to as radial axis assembly, secured to and extending horizontally from said theta axis assembly, said theta axis assembly rotatably positioning said radial axis assembly within predetermined angular limits in response to position commands; said radial axis assembly including a mechanical drive means, an electrical drive means for controlling said mechanical drive means in response to position commands, and an arm structure for supporting said electrical drive means and said mechanical drive means; the mechanical drive means including: a dual rail guide means; a movable carriage means coupled to said dual rail guide means; a ball screw drive mechanism having a ball nut attached to said carriage means and a ball screw coupled to said electrical drive means to cause said carriage means to traverse said dual rail guide means in response to position commands; and a control console means for supplying position commands to said theta axis assembly and said radial axis assembly.

A preferred embodiment described herein comprises a rotatable base-mounted theta axis assembly and a radial axis assembly secured to the theta axis assembly to support the horizontal traversing motion of a carriage in response to controlled excitation of a ball-screw drive mechanism. The carriage supports a predetermined end effector, a vertical motion linear axis module and/or a rotary wrist assembly depending on the requirements of the specific application. DC servo drives with position feedback taken directly from the drive motor associated with each axis assembly provide highly stable servo response. The direct coupling of the drive motors to low backlash drive elements, e.g., an harmonic drive of the theta axis assembly and a ball screw mechanism of the radial axis assembly, minimizes lost motion and provides desired accuracy, repeatability and stiffness.

The radial axis assembly experiences minimal variations in bending and essentially no torsion loading as compared with traditional jointed arm configurations. This allows the total mass of the apparatus support structure to be relatively light with reduced cross sections. The traversing carriage of the radial axis assembly significantly reduces inertia variations as compared to the jointed arm type manipulator apparatus. This reduces the size and torque requirements of the drive motors.

Simultaneous control for the radial movement of the radial axis carriage and the rotary motion of the theta axis assembly may be implemented by a commercially available control system such as the model MCS30 or the model MCS60 which are available from the Westinghouse Electric Corporation, U.S.A.

DESCRIPTION OF THE DRAWINGS

The invention will become more readily apparent from the following description to be read in conjunction with the accompanying drawings:

Figure 1 is a pictorial illustration of a radial/theta manipulator apparatus showing an embodiment of the invention;

Figure 2 is a partial sectioned view of the interface of the theta and radial axis assemblies of Figure 1;

Figures 3, 4 and 5 are sectioned illustrations of the radial arm assembly of Figure 1;

Figure 6 is a sectioned illustration of the theta axis assembly of Figure 1; and

Figures 7 and 8 are schematic illustrations of the end of travel and hardstop limits of the theta axis assembly.

DESCRIPTION OF THE PREFERRED EMBODIMENT

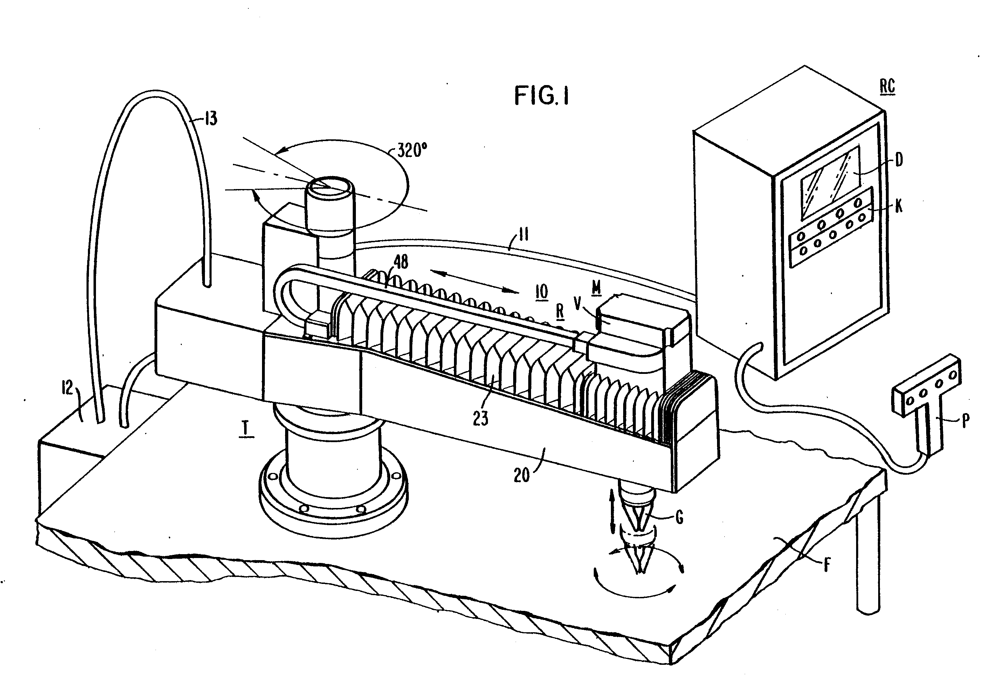

Referring to Figure 1 there is pictorially illustrated a radial/theta manipulator apparatus 10 having a theta axis assembly T secured to a work surface F and a radial axis assembly R extending horizontally from the theta axis assembly T. Electrical control and excitation for the radial/theta manipulator apparatus 10 is provided by the control console RC through cable 11 which terminates in a junction box 12 secured to the work surface F. A flexible cable 13 extends from the junction box 12 to the apparatus 10.

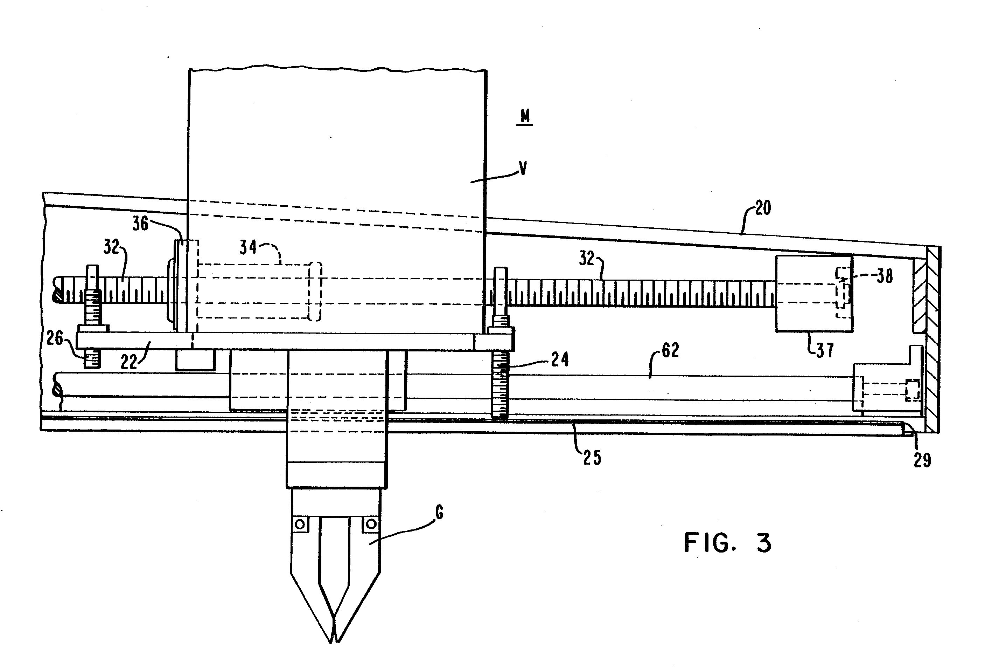

The radial axis assembly R as shown in Figures 1-5 includes a horizontal arm structure 20 which supports a movable carriage 22, a dual rail guidance system comprising rails 62 and 64, a ball screw drive mechanism 30 and a DC servo drive 40 including drive motor 42, tachometer 44 and resolver 46.

In the simplest implementation, an end effector module M including a vertical axis position unit V and a gripper G, is secured within the opening 21 of the movable carriage 22 to service a working envelope E defined by the travel distance of the movable carriage 22 on the dual rail guide system, the 320° rotation of the radial arm assembly R provided by the theta axis assembly T and the vertical stroke of the vertical axis position unit V.

The securing of the module M at a center position of the carriage 22 allows for ease of module interchangeability and eliminates the bending moment problems associated with end effectors which are supported off the end of a jointed arm of conventional devices.

If rotary wrist action is required, a suitable 2 or 3 axis rotary wrist may couple the gripper G to the vertical position unit V to provide additional degrees of movement for the gripper G in response to signals from the control console RC.

The electrical control and excitation for the end effector module M is provided by the control console RC via cabling in the flexible conduit 48.

The vertical stroke motion of the vertical axis position unit V may be implemented through numerous known techniques including pneumatic configurations, and DC servo driven mechanical configurations such as a rack and pinion mechanism or a ball screw mechanism.

The bellows-cover 21 protects the ball screw mechanism 30 and guide rails 62 and 64 from dust and dirt.

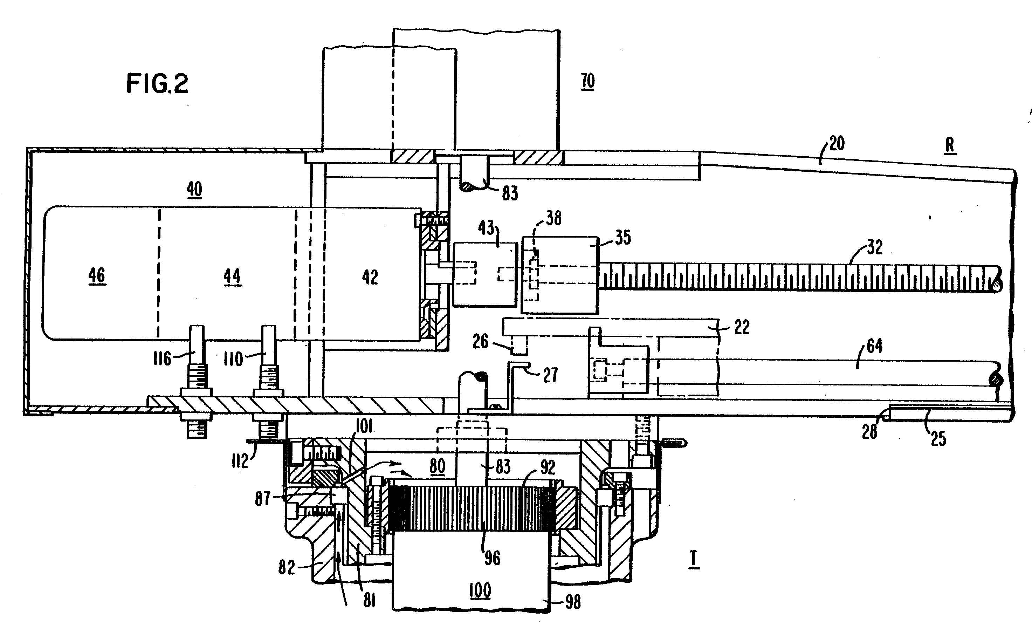

The sectioned view of Figures 2, 3 and 4 illustrates the ball screw drive mechanism 30 as including a ball screw 32, which is secured at either end in duplex bearing pillow blocks 35 and 37, and a ball nut 34 secured to a nut bracket 36. The pillow blocks 35 and 37 are attached to the arm structure 20 and the nut bracket is affixed to the movable carriage 22. The nuts 38 at either end of the ball screw 32 are tightened to minimize mechanical play and backlash. The ball nut 34 is preloaded with respect to the ball screw 32 by selecting the ball size required to minimize axial and radial backlash, or lost motion. This technique for minimizing lost motion using a single ball nut contrasts with the conventional double ball nut configuration which uses more space and would reduce the working envelope of the apparatus 10. The ball screw 32 is directly coupled to the drive motor 42 by the flexible coupling 43 and responds to the signals developed by the control console RC to position the movable carriage 22 and end effector module M. The tachometer 44 connected to drive motor 42 provides speed feedback information to the control console RC. The resolver 45 provides position feedback information to the control console RC.

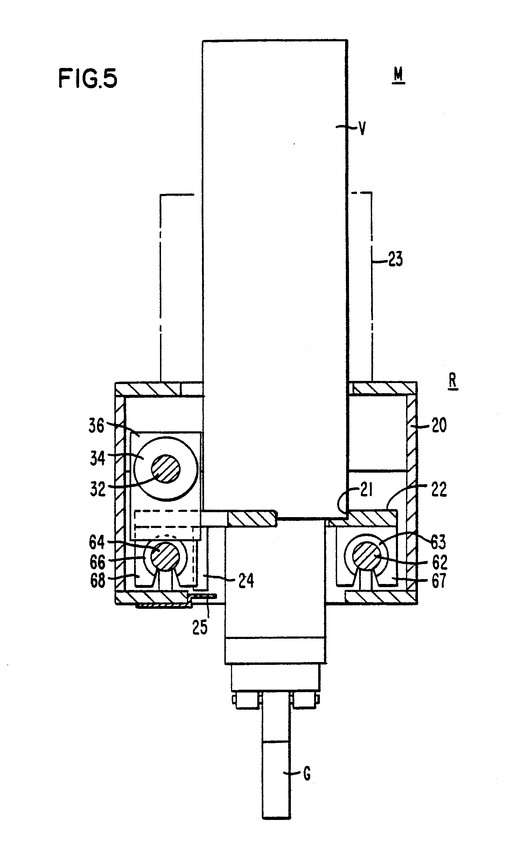

Referring to Figure 5 the ball screw mechanism 30 is offset from the centerline of the radial axis assembly R to provide the necessary clearance for the radial axis travel of the carriage 22 and end effector module M. The movable carriage 22 is coupled to the dual guide rails 62 and 64 by the linear ball bushings 63 and 66, which are preloaded and sealed in the pillow blocks 67 and 68 respectively. The linear ball bushings and guide rails are available from Thomson Industries.

The preloaded ball screw drive mechanism 30 and preloaded linear ball bushings 63 and 66 minimize backlash and cooperate with the direct coupled DC servo drive 40 to provide stiff and positive response to position commands received from the control console RC. The critical preloading of the mechanical drive elements permits smooth movement of the carriage 22 even though the ball screw drive mechanism 30 is not centered with respect to the carriage 22 and the guide rails 62 and 64.

An end of travel proximity switch 24 is secured to the movable carriage 22 and is aligned with a continuous proximity target plate 25 which extends the length of the prescribed travel of the movable carriage 22 as shown in Figures 2-4. The ends 28 and 29 of the proximity target plate 25 define the end of travel limits of the movable carriage 22. When the proximity switch 24 passes beyond the edge of the proximity target plate 25 a proximity switch signal is transmitted back to the control console RC and the control console RC deenergizes the drive motors of the apparatus 10. This shutdown action also occurs if the wiring to the proximity switch 24 is broken or damaged. A home location proximity switch 26 is also secured to the movable carriage 22 and is used to indicate a home position for the movable carriage 22 when the control console RC generates a home-seeking command. The radial axis assembly R responds to a home-seeking command by moving the movable carriage 22 toward the theta axis assembly T until the proximity switch 26 detects the proximity target plate 27. The proximity switch 26 then transmits a signal to the control console RC and the control console RC searches for the null position of the resolver 45. This finally positions the movable carriage 22 at its home position. The home position serves as the reference for the starting position of all program information stored in the memory of the control console RC.

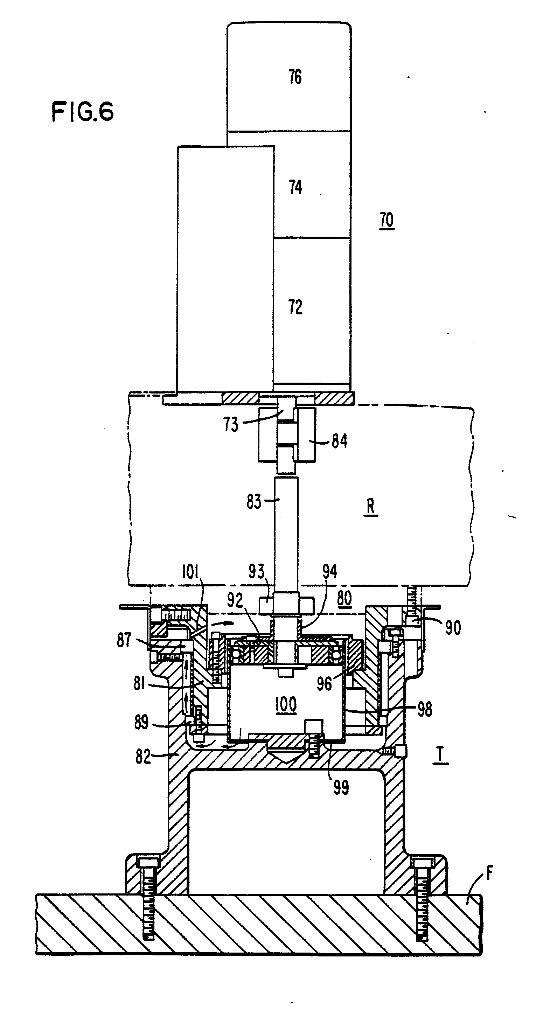

The sectioned illustration of the theta axis assembly T, as shown in Figures 2 and 6, consists of a closed loop DC servo drive arrangement 70 and an harmonic drive unit 80. The DC servo drive arrangement 70 includes a DC drive motor 72, tachometer 74 and resolver 76. As indicated above, the tachometer 74 provides speed feedback information to the control console RC, and the resolver 76 provides position feedback information to the control console RC. The harmonic drive unit 80, which functions as a gear reduction unit to provide a 100:1 reduction, may be implemented through the use of an harmonic drive unit which is commercially available from the USM Corporation.

The harmonic drive unit 80 consisting of a wave generator 92, a circular spline 96 and a flexible spline 98 is secured within the torque tube 81. The torque tube is rotatably retained within the housing 82 by the bearing set comprised of preloaded bearings 87 and 89. The outer race of the bearing 87 is affixed to the housing 82 and the inner race is affixed to the torque tube 81. The inner race of the bearing 89 is secured to the torque tube 81 while the outer race is allowed to float axially. The use of preloaded bearings assures a uniform bearing friction by preventing unauthorized access to the preload characteristics of the bearings 87 and 89. The radial arm assembly R is attached to the torque tube 81 by the bolts 90.

A drive shaft 83, which is supported by bearing 93, has one end connected to the wave generator 92 by the rigid coupling 94 and the opposite end coupled to the shaft 73 of the drive motor 72 by the flexible coupling 84.

The torsional stiffness of the drive shaft 83 and the flexible coupling 84 is by design, greater than the torsional stiffness of the harmonic drive unit 80 in order to minimize over shoot of the radial axis assembly R due to spring wind up of the drive components when the assembly R is rotated into position at relatively high rates of acceleration and deceleration. The direct mechanical connection between the harmonic drive unit 80 and the drive shaft 83 provided by the rigid coupling 94 eliminates back lash and maintains the repeatability and accuracy of the rotary positioning action of the theta axis assembly T.

The circular spline 96 is attached to the torque tube 81 and the flexible spline 98 is attached to the housing 82. The circular spline 96 is tightened into place so that relative motion between the circular spline 96 and the torque tube 81 is essentially elminated. As the radial axis assembly R rotates, the flex spline 98 functions as a spring member. When the radial axis assembly R is rotated into its prescribed position, the spring action of the flex spline 98 tends to return the assembly R to the original position. This "unwinding" action is balanced by the force of friction developed by the bearing set of bearings 87 and 89.

While the combination of the assembly R, the harmonic drive unit 80, the torque tube 81, drive shaft 83 and flexible coupling 84 establish the spring rate of the apparatus 10, the stiff design of all but the harmonic drive unit 80 results in the harmonic drive unit 80 being the major contributor to the spring rate. The friction force of the preloaded bearings 87 and 89 is selected to be less than the positioning force resulting from the windup of the harmonic drive unit 80. The critical selection of bearing preload and friction maintains the system accuracy and repeatability with minimum joint deflection.

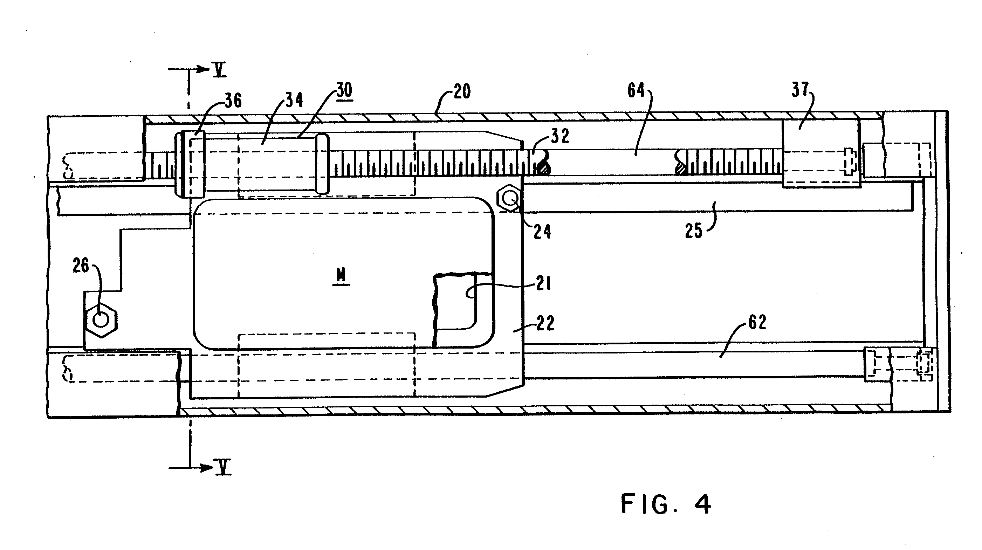

The harmonic drive unit 80 is immersed in an oil bath 100. The flexing motion of the flexible spline 98 effectively "pumps" the oil through apertures 99, the bearings 87 and 89 and the passage 101 in the torque tube 81 to develop an oil circulation path as shown by the arrows in Figure 4. This oil circulation removes heat from the oil and prevents undesired pressure build up in the unit 80.

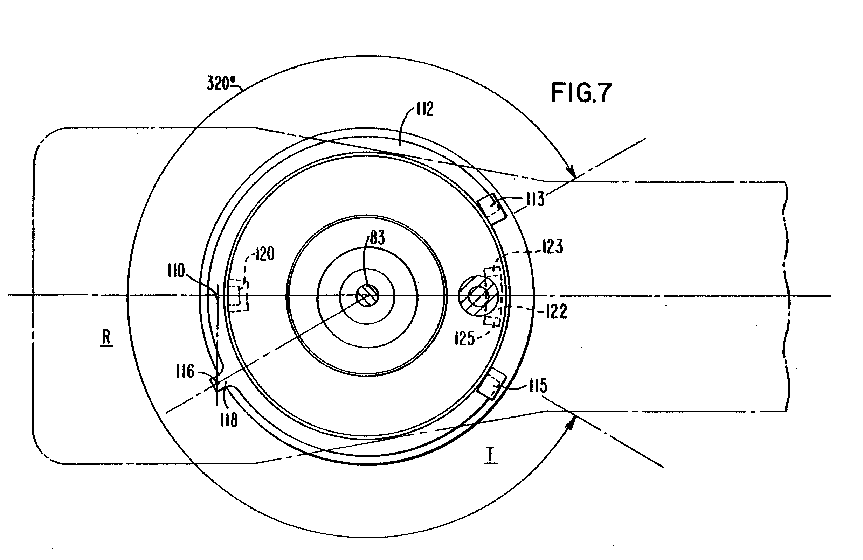

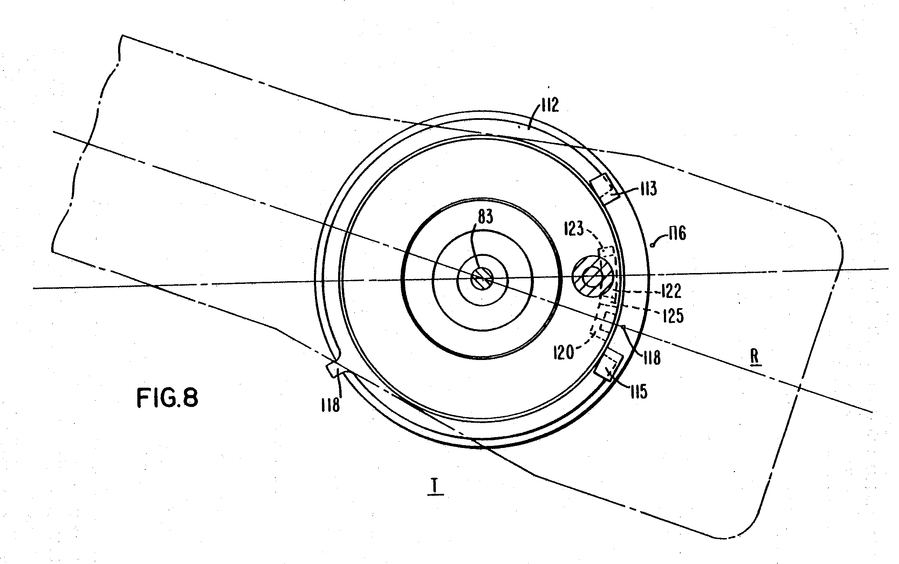

The rotary motion of the theta axis assembly T is preset at 320° as shown schematically in Figures 7 and 8. An end of travel proximity switch 110, which is attached to the radial axis assembly R, tracks a target plate 112 secured to the housing 82 of theta axis assembly T. The limit switch 110 detects the end of travel limits 113 and 115 of the target plate by signaling the control console RC to deenergize the drive motor 72. A home location proximity switch 116, also secured to the radial axis assembly R responds to a home detector target 118 extending from the target plate 112 to communicate theta axis assembly home location information to the control console RC.

A mechanical end of travel back up for the theta axis assembly T is provided the hard stop element 120 secured to the torque tube 81 and the stationary end of travel element 122 affixed to the housing 82. Polyurethane bumpers 123 and 125 attached to the element 122 absorb the mechanical impact between the hard stop element and the end of travel element 122.

Inasmuch as the design of the manipulator apparatus 10 is such that conventional machine tool programming and control techniques can be employed, the implementation of the control console RC associated with the apparatus 10 may take one of several forms. Available programming techniques include the conventional teach by lead-through technique whereby a teach pendant P of Figure 1 is provided and the apparatus 10 is jogged through a series of point positions with each point being recorded in the memory of the control console RC.

A second type of programming instruction provides manual data input whereby an operator using the keyboard K of the control console can enter a program and have it stored in memory.

A cathode ray tube display D provides the operator with information pertaining to the operation of the manipulator apparatus 10. Commercially available systems enable the operator to display the position of the end effector, e.g. gripper G, as well as access programs which have been placed in storage, modify programs and write new programs.

10

CLAIMS:

1. A manipulator apparatus, of the type capable of radial movement and angular movement about an axis, comprising:

an angular movement assembly hereinafter referred to as theta axis assembly;

a radial movement assembly hereinafter referred to as radial axis assembly, secured to and extending horizontally from said theta axis assembly, said theta axis assembly rotatably positioning said radial axis assembly within predetermined angular limits in response to position commands;

said radial axis assembly including a mechanical drive means, an electrical drive means for controlling said mechanical drive means in response to position commands, and an arm structure for supporting said electrical drive means and said mechanical drive means;

the mechanical drive means including:

a dual rail guide means;

a movable carriage means coupled to said dual rail guide means;

a ball screw drive mechanism having a ball nut attached to said carriage means and a ball screw coupled to said electrical drive means to cause said carriage means to traverse said dual rail guide means in response to position commands; and

a control console means for supplying position commands to said theta axis assembly and said radial axis assembly.

2.  A manipulator apparatus as claimed in claim 1 wherein said carriage means includes an aperture therein, an end effector module secured within said aperture to service a work zone envelope defined essentially by a traverse of said carriage means on said dual rail guide means and the degree of rotation of said theta axis assembly.

3.  A manipulator apparatus as claimed in claim 1 wherein said ball screw drive mechanism is offset from a line which is the longitudinal center line of the combination of said carriage means and said dual rail guide means.

4.  A manipulator apparatus as claimed in claim 1 including linear ball bushings coupling said carriage means to said dual rail guide means, said linear ball bushings and said ball screw drive mechanism being preloaded to assure smooth traversing of said carriage means in response to position commands.

5.  A manipulator apparatus as claimed in claim 1 including a radial axis end-of-travel limit switch attached to said carriage means and a radial axis end-of-travel target plate disposed in a spaced-apart relationship with respect to said end-of-travel limit switch and extending the length of travel of said carriage means, said limit switch supplying an end-of-travel limit signal to said control console when said end-of-travel limit switch detects either end of said trarget plate, said control console responding to said end-of-travel limit signal by de-energizing said electrical drive means.

6.  A manipulator apparatus as claimed in claim 1 further including a radial axis home-location proximity-switch attached to said carriage means and a radial axis home location target plate secured to said arm structure at a predetermined home location for said radial axis assembly, said radial axis home-location proximity-switch supplying a home location signal to said control console when said home location proximity switch detects said target plate.

7. A manipulator apparatus as claimed in claim 1 wherein said electrical drive means comprises a DC servo drive means including a drive motor directly coupled to said ball screw, a tachometer for transmitting speed feedback information to said control console and a resolver for transmitting position feedback information to said control console.

8. A manipulator apparatus as claimed in claim 1 wherein said theta axis assembly includes a mechanical drive means and a DC servo drive means comprising a drive motor, a tachometer and a resolver;

the mechanical drive means comprising:

a housing;

torque tube means and bearing means for retaining said torque tube means within said housing, said radial axis assembly being attached to said torque tube means;

harmonic drive means including a wave generator, a circular spline and a flexible spline secured within said torque tube means; and

a drive shaft having one end rigidly connected to said wave generator and the opposite end coupled to the drive motor of said DC servo drive means.

9. A manipulator apparatus as claimed in claim 8 wherein said bearing means is preloaded to develop a frictional force to compensate for the spring rate of the harmonic drive means during rotational positioning of the radial axis assembly by the theta axis assembly.

10. A manipulator apparatus as claimed in claim 8 including a theta axis end-of-travel limit switch secured to said radial axis assembly and spaced apart from a theta axis end-of-travel target plate secured to said housing and defining predetermined end-of-travel limits for the rotary motion of the theta axis assembly.

11. A manipulator apparatus as claimed in claim 8 including a theta axis home location proximity switch secured to said radial axis assembly and a theta axis home

13

location target plate secured to said housing to define the home location for said theta axis assembly.

12. A manipulator apparatus as claimed in claim 8 wherein said drive shaft extends from said housing through said radial axis assembly to said DC servo drive means, said DC servo drive means being mounted external to and on top of the radial axis assembly.

13. A manipulator apparatus as claimed in claim 8 including an oil bath wherein said harmonic drive means is immersed, the flexing motion of the flex spline functioning to pump the oil in a circulator path within the housing.

FIG.1

0122147

FIG.2

FIG. 3

FIG. 4

FIG.5

M

V

23

R

20

36

34

32

21    22

64    63

66    62

68    67

24

25

G

FIG.6

0122147

6/8

0122147

FIG.7

112

320°

113

123

122

115

I

83

125

120

110

116

118

R

FIG.8

0122147

0122147

EUROPEAN SEARCH REPORT

European Patent Office

Application number

EP 84302430.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | EP - A1 - 0 048 904 (FUJITSU FANUC LIM.)  * Abstract; claims; fig. 1 * | 1 | B 25 J 9/00 |
| A | EP - A1 - 0 061 153 (H. RICHTER)  * Claims; abstract; fig. 1 * | 1 | |
| A | US - A - 3 935 950 (QUALITY STEEL FABRICATORS)  * Claim 1; abstract; fig. 1 * | 1 | |
| A | US - A - 4 187 051 (J. KIRSCH, K. KIRSCH)  * Column 2, line 54 - column 7, line 7; claims; abstract; fig. 1 * | 1 | |
| A | CH - A - 590 114 (KELLER, KNAPPICH)  * Claims; fig. 1 * | 1 | TECHNICAL FIELDS SEARCHED (Int. Cl. 3)  B 25 J 5/00  B 25 J 9/00  B 25 J 11/00  B 25 J 13/00 |
| A | DE - C - 2 903 185 (FUJITSU FANUC LTD.)  * Column 3, lines 10-35; fig. 1 * | 1 | |
| A,P | WO - A1 - 83/01 407 (US-ROBOTS INC.)  * Claims; abstract; fig. 1 * | 1 | |

The present search report has been drawn up for all claims

| Place of search | Date of completion of the search | Examiner |
|---|---|---|
| VIENNA | 16-07-1984 | BAUMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82